# DEMANDE DE BREVET EUROPEEN

(11) **EP 0 913 591 A1**
(43) Date de publication de la demande: **06.05.1999**
(21) Numéro de dépôt: 98402621.1
(22) Date de dépôt: 21.10.1998
(51) Int. Cl.: F16B 7/04

(54) **Attache rapide pour la fixation de deux organes l'un sur l'autre**

(30) Priorité: 28.10.1997 FR 9713518
(71) Demandeur: ECIA - EQUIPEMENTS ET COMPOSANTS POUR L'INDUSTRIE AUTOMOBILE, F-25400 Audincourt (FR)
(72) Inventeur: Hoblingre, André, 90380 Roppe (FR); Borde, Patrick, 25400 Audincourt (FR); Mouhot, Frédéric, 25420 Voujeaucourt (FR)
(74) Mandataire: Habasque, Etienne Joel Jean-François

(57) **Abrégé**

Cette attache rapide pour la fixation de deux organes l'un sur l'autre, dont l'un (2) comporte une queue (3) et l'autre (4), une douille (5), munies de moyens complémentaires à encliquetage automatique (6) de verrouillage en position de montage l'une dans l'autre, est caractérisée en ce que la queue (3) et la douille (5) comprennent des surfaces complémentaires d'accouplement angulaire à effet de coin radial et des moyens complémentaires (11) à engagement radial d'immobilisation axiale de la queue dans la douille, en position de montage et en ce qu'elle comporte des moyens (14,15) de mise sous contrainte de ces surfaces d'accouplement et de ces moyens d'immobilisation, pour verrouiller la queue en position de montage dans la douille ou d'éjection de la queue de la douille, si cette queue n'est pas en position de montage.

## Description

La présente invention concerne une attache rapide pour la fixation de deux organes l'un sur l'autre.

On connaît déjà dans l'état de la technique, des attaches rapides de ce type qui permettent d'assurer la fixation de deux organes l'un sur l'autre et notamment de deux organes d'un ensemble de colonne de direction d'un véhicule automobile.

L'un de ces organes comporte alors une queue et l'autre une douille, cette queue et cette douille étant munies de moyens complémentaires à encliquetage automatique de verrouillage en position de montage l'une dans l'autre.

C'est ainsi par exemple que l'on a déjà proposé de réaliser ces moyens complémentaires à encliquetage automatique de verrouillage sous la forme de moyens de fixation à baïonnette.

Cependant les attaches de ce type présentent un certain nombre d'inconvénients notamment en raison de la complexité de leur structure.

Le but de l'invention est donc de résoudre ces problèmes.

A cet effet l'invention a pour objet une attache rapide pour la fixation de deux organes l'un sur l'autre, dont l'un comporte une queue et l'autre une douille, munies de moyens complémentaires à encliquetage automatique de verrouillage en position de montage l'une dans l'autre, caractérisée en ce que la queue et la douille comprennent des surfaces complémentaires d'accouplement angulaire à effet de coin radial et des moyens complémentaires à engagement radial d'immobilisation axiale de la queue dans la douille, en position de montage, en ce qu'elle comporte des moyens de mise sous contrainte de ces surfaces d'accouplement et de ces moyens d'immobilisation, pour verrouiller la queue en position de montage dans la douille ou d'éjection de la queue de la douille si cette queue n'est pas en position de montage, et en ce que les moyens de mise sous contrainte comprennent des moyens en forme de coin à effet radial, sollicités axialement par des moyens élastiques entre des surfaces d'appui en regard de la douille et de la queue.

L'invention sera mieux comprise à l'aide de la description qui va suivre, donnée uniquement à titre d'exemple et faite en se référant aux dessins annexés, sur lesquels :
- La Fig. 1 représente une vue de côté en coupe d'un exemple de réalisation d'une attache rapide selon l'invention, et
- la Fig.2 représente une vue de face en coupe d'une telle attache rapide.

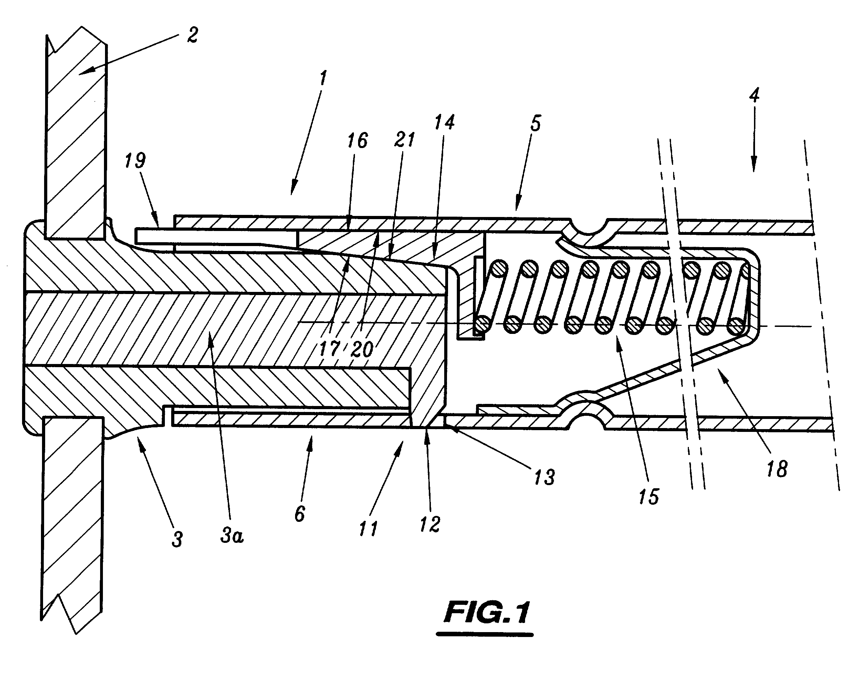

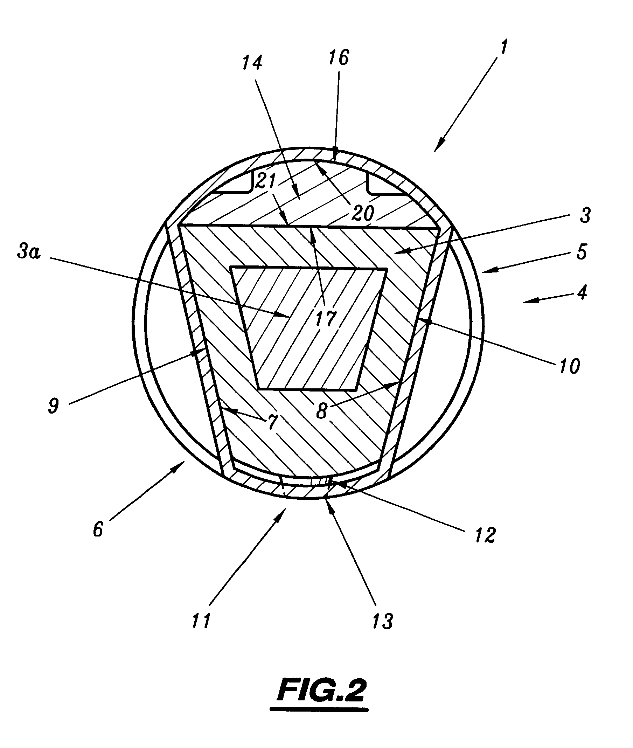

On a en effet représenté sur ces figures 1 et 2, une attache rapide qui est désignée par la référence générale 1 sur ces figures et qui permet d'assurer la fixation de deux organes l'un sur l'autre.

L'un de ces organes est désigné par la référence générale 2 sur ces figures et comporte une queue désignée par la référence générale 3, tandis que l'autre organe est désigné par la référence générale 4 sur ces figures et comporte une douille désignée par la référence générale 5.

Cette queue et cette douille sont munies de moyens complémentaires à encliquetage automatique de verrouillage en position de montage l'une dans l'autre, ces moyens étant désignés par la référence générale 6 sur ces figures.

En fait la queue et la douille comprennent des surfaces complémentaires d'accouplement angulaire à effet de coin radial et des moyens complémentaires à engagement radial d'immobilisation axiale de la queue dans la douille en position de montage et l'attache comporte également des moyens de mise sous contrainte de ces surfaces d'accouplement et de ces moyens d'immobilisation, pour verrouiller la queue en position de montage dans la douille ou d'éjection de la queue de la douille si cette queue n'est pas en position de montage.

C'est ainsi par exemple comme on peut le voir plus clairement sur la Fig.2, que la queue désignée par la référence générale 3 peut comporter au moins deux surfaces opposées 7 et 8, inclinées l'une par rapport à l'autre et faisant par exemple entre elles un angle égal à 30°, tandis que la douille comporte deux surfaces opposées respectivement 9 et 10, par exemple complémentaires aux surfaces correspondantes 7 et 8 de la queue, c est-à-dire faisant également entre elles un angle par exemple de 30°.

On conçoit alors que ces surfaces complémentaires de la queue et la douille constituent des surfaces d'accouplement angulaire à effet de coin radial, dans la mesure où elles permettent d'accoupler en rotation la queue et la douille et que plus les surfaces de la queue s'engagent radialement entre les surfaces correspondantes de la douille plus cet accouplement est fiable et sans jeu.

Comme on l'a indiqué précédemment, la queue et la douille comprennent également des moyens complémentaires à engagement radial d'immobilisation axiale de la queue dans la douille.

Ces moyens sont visibles plus clairement sur la Fig. 1 et sont désignés par la référence générale 11.

En fait, ces moyens d'immobilisation axiale de la queue dans la douille peuvent comporter au moins une partie en saillie radiale de l'une des pièces, c'est-à-dire de la queue ou de la douille, qui est adaptée pour coopérer avec une surface de butée complémentaire de l'autre pièce, c'est-à-dire de la douille ou de la queue.

Dans l'exemple de réalisation représenté en regard de cette figure 1, ces moyens complémentaires d'immobilisation comprennent une partie en saillie radiale 12 de la queue, qui est adaptée pour s'engager dans un évidement complémentaire 13 de la douille par déplacement radial de la queue par rapport à la douille.

De préférence cette partie en saillie et cet évidement complémentaire peuvent présenter des formes générales tronconiques.

De plus, une telle attache comporte des moyens de mise sous contrainte de ces surfaces d'accouplement et de ces moyens d'immobilisation, pour verrouiller la queue en position de montage dans la douille.

Dans l'exemple décrit en regard de ces figures, les moyens de mise sous contrainte comportent des moyens en forme de coin à effet radial, désignés par la référence générale 14 sur ces figures, sollicités axialement par des moyens élastiques désignés par la référence générale 15, entre des surfaces d'appui en regard de la douille et de la queue, respectivement 16 et 17.

Dans cet exemple, les moyens en forme de coin 14 et les moyens élastiques 15 sont disposés dans la douille et les moyens élastiques 15 comprennent par exemple un ressort hélicoïdal, dont une extrémité est en appui sur les moyens en forme de coin 14 et dont une autre extrémité est en appui sur une rondelle 18 de maintien de celle-ci en position dans la douille.

Ces moyens en forme de coin 14 peuvent comporter une portion de manoeuvre désignée par la référence générale 19, par exemple faisant saillie hors de la douille entre les deux organes dont il y a lieu d'assurer la fixation, pour permettre un déplacement de ceux-ci, par exemple par un opérateur équipé d'un outil approprié, vers une position de déverrouillage de la queue par rapport à la douille comme cela sera décrit plus en détail par la suite.

On notera également que les surfaces d'appui 17 de la queue, 16 de la douille et/ou les surfaces correspondantes 20 et 21 des moyens en forme de coin, peuvent être inclinées par rapport à l'axe de la queue et de la douille pour obtenir l'effet de coin radial souhaité entre la douille et la queue.

Ces moyens en forme de coin sont par exemple disposés du côté de la queue 3 opposé à celui muni des moyens d'immobilisation correspondants, c'est-à-dire du côté ouvert des surfaces d'accouplement de la queue et de la douille, pour solliciter ceux-ci en position d'engagement et les surfaces d'accouplement en contact les unes contre les autres.

Enfin, on notera également qu'un insert de rigidification 3a peut être prévu dans la queue 3 de l'organe correspondant pour améliorer les caractéristiques de résistance mécanique de celle-ci, la partie en saillie 12 de la queue étant par exemple venue de matière avec cet insert et que la queue et la douille peuvent par exemple être venues de matière avec les organes correspondants.

Une telle attache rapide trouve par exemple des applications pour la liaison de deux organes d'un ensemble de colonne de direction de véhicule automobile et permet d'assurer par exemple la fixation automatique d'un volant de direction dans un arbre de direction d'un véhicule.

A cet effet, la queue peut par exemple être venue de matière avec le volant de direction, tandis que la douille peut quant à elle être venue de matière avec l'arbre de direction. L'inverse peut bien entendu être envisagé.

L'opérateur de montage saisi alors le volant et place la queue 3 de celui-ci en regard de l'extrémité correspondante de l'arbre de direction, munie de la douille 5. Il engage alors la queue dans la douille, la partie en saillie radiale par exemple 12 de cette queue se déplaçant sur une surface correspondante de cette douille en permettant de maintenir les surfaces d'accouplement 7 et 8 de cette queue à distance des surfaces complémentaires 9 et 10 de la douille pour faciliter ce déplacement.

Lors de ce déplacement, la queue 3 vient également en appui contre les moyens en forme de coin 14 pour repousser ceux-ci dans la douille, en comprimant le ressort 15, afin de permettre l'engagement de la queue dans la douille.

Au moment où la partie en saillie radiale 12 de la queue arrive en regard de l'évidement correspondant 13 de la douille, cette partie en saillie s'engage radialement dans cet évidement en autorisant un léger déplacement radial de la queue dans la douille sous l'effet de la sollicitation des moyens en forme de coin 14, qui se déplacent alors axialement sous l'action du ressort 15, entre les surfaces d'appui 16 de la douille et 17 de la queue. Ceci amène alors les surfaces complémentaires d'accouplement angulaire de la queue et de la douille en contact les unes contre les autres.

Le ressort 15 tend alors à pousser axialement les moyens en forme de coin 14 entre les surfaces d'appui 16 de la douille et 17 de la queue pour mettre les surfaces d'accouplement complémentaires et les moyens d'immobilisation axiale de la queue et de la douille sous contrainte et verrouiller la queue en position de montage dans la douille. La fixation de la queue dans la douille est alors extrêmement fiable et sans jeu.

Lorsqu'un utilisateur souhaite déverrouiller la queue de sa position de montage dans la douille, il actionne la portion de manoeuvre 19 des moyens en forme de coin 14 pour faire reculer ceux-ci dans la douille et autoriser un dégagement de la queue de cette douille.

On conçoit alors que cette structure d'attache présente un certain nombre d'avantages notamment au niveau de sa simplicité et de l'accouplement obtenu entre les deux organes qui est extrêmement fiable et sans aucun jeu.

En effet la mise sous contrainte des surfaces complémentaires d'accouplement et des moyens d'immobilisation en position axiale de la queue dans la douille est obtenue par les moyens en forme de coin associés aux moyens de sollicitation élastique.

Ceci permet alors de rattraper les éventuelles tolérances liées à la fabrication de ces pièces.

On notera également qu'une telle structure permet d'éviter toute fausse position de verrouillage de la queue dans la douille, car si la queue n'est pas en position correcte de montage, les moyens en forme de coin associés au ressort éjectent la queue de la douille.

Ces moyens et ce ressort emmagasinent en effet une certaine énergie lors de l'engagement de la queue dans la douille, cette énergie étant utilisée par la suite soit pour verrouiller la queue en position de montage dans la douille afin d'obtenir une liaison fiable et sans jeu, soit pour éjecter la queue de la douille, si la queue n'est pas dans cette position de montage.

Ces moyens en forme de coin et ce ressort peuvent également être portés par la queue au lieu d'être disposés dans la douille comme dans l'exemple décrit.

Il va de soi bien entendu que différents modes de réalisation de ces pièces peuvent être envisagés et que différents procédés peuvent être envisagés pour former celles-ci, par exemple par moulage, par extrusion...

Il va de soi également que des moyens de mise sous contrainte des surfaces d'accouplement et des moyens d'immobilisation autres qu'un organe en forme de coin à effet radial peuvent être envisagés pour maintenir la queue dans la douille.

## Revendications

1. Attache rapide pour la fixation de deux organes l'un sur l'autre, dont l'un (2) comporte une queue (3) et l'autre (4) une douille (5), munies de moyens complémentaires à encliquetage automatique (6) de verrouillage en position de montage l'une dans l'autre, caractérisée en ce que la queue (3) et la douille (5) comprennent des surfaces complémentaires d'accouplement angulaire à effet de coin radial (7,8,9,10) et des moyens complémentaires (11) à engagement radial d'immobilisation axiale de la queue dans la douille, en position de montage, en ce qu'elle comporte des moyens (14,15) de mise sous contrainte de ces surfaces d'accouplement et de ces moyens d'immobilisation, pour verrouiller la queue en position de montage dans la douille ou d'éjection de la queue de la douille si cette queue n'est pas en position de montage, et en ce que les moyens de mise sous contrainte comprennent des moyens en forme de coin à effet radial (14), sollicités axialement par des moyens élastiques (15) entre des surfaces d'appui en regard (16,17) de la douille (5) et de la queue (3).

2. Attache rapide pour la fixation de deux organes selon la revendication 1, caractérisée en ce que les moyens en forme de coin (14) et les moyens élastiques (15) sont disposés dans la douille (5).

3. Attache rapide pour la fixation de deux organes selon la revendication 1, caractérisée en ce que les moyens en forme de coin (14) et les moyens élastiques (15) sont portés par la queue (3).

4. Attache rapide pour la fixation de deux organes selon l'une quelconque des revendication précédentes, caractérisée en ce que les moyens en forme de coin (14) comportent une portion de manoeuvre (19) pour permettre un déplacement de ceux-ci vers une position de déverrouillage de la queue par rapport à la douille.

5. Attache rapide pour la fixation de deux organes selon l'une quelconque des revendications précédentes, caractérisée en ce que les surfaces d'appui (16,17,20,21) de la queue (3), de la douille (5) et/ou des moyens en forme de coin (14) sont inclinées par rapport à l'axe de la queue et de la douille.

6. Attache rapide pour la fixation de deux organes selon l'une quelconque des revendications précédentes, caractérisée en ce que les surfaces complémentaires d'accouplement angulaire de la queue et de la douille comprennent au moins deux surfaces inclinées (7,8,9,10) l'une par rapport à l'autre de chacune de ces pièces.

7. Attache rapide pour la fixation de deux organes selon l'une quelconque des revendications précédentes, caractérisée en ce que les moyens (11) d'immobilisation axiale de la queue dans la douille comprennent au moins une partie en saillie radiale (12) de l'une de ces pièces, queue ou douille, adaptée pour coopérer avec une surface de butée complémentaire (13) de l'autre pièce, douille ou queue.

8. Attache rapide pour la fixation de deux organes selon la revendication 7, caractérisée en ce que ladite partie en saillie (12) et ladite surface de butée (13) présentent des formes générales complémentaires tronconiques.

9. Attache rapide pour la fixation de deux organes selon la revendication 8, caractérisée en ce que la surface de butée (13) se présente sous la forme d'un évidement.

10. Attache rapide pour la fixation de deux organes selon l'une quelconque des revendications précédentes, caractérisée en ce qu'un insert de rigidification (3a) est prévu dans la queue (3) de l'organe correspondant.

11. Attache rapide pour la fixation de deux organes selon l'une quelconque des revendications précédentes, caractérisée en ce que la queue et la douille sont venues de matière avec les organes correspondants.
